# EUROPÄISCHE PATENTANMELDUNG

(11) **EP 1 050 910 A2**
(43) Veröffentlichungstag der Anmeldung: **08.11.2000**
(21) Anmeldenummer: 00109424.2
(22) Anmeldetag: 03.05.2000
(51) Int. Cl.: H01L 31/048, H01L 31/042

(54) **Solarmodul zur Anbringung an Fahrzeugen und Verfahren zur Herstellung desselben**

(30) Priorität: 07.05.1999 DE 19921265
(71) Anmelder: Webasto Vehicle Systems International GmbH, 82131 Stockdorf (DE)
(72) Erfinder: Ganz, Thomas, 82131 Stockdorf (DE)
(74) Vertreter: Wiese, Gerhard

(57) **Zusammenfassung**

Die Erfindung betrifft ein Solarmodul (10) zur Anbringung an Fahrzeugen, das mit einer oberen Abdecklage (12) und einer unteren Abdecklage (14), zwischen welchen ein Solargenerator (18) eingebettet ist, der mehrere elektrisch miteinander verbundene Solarzellen (20) umfaßt, sowie zwei elektrischen Anschlüssen (28, 30) zum Abgreifen des von dem Solargenerator erzeugten Solarstroms versehen ist. Die Anschlüsse (28, 30) sind an einer Anschlußbuchse (26) vorgesehen, die an einer Seite des Solarmoduls (10) vorgesehen ist und deren von der Anschlußseite abgewandter Teil (32) dichtend zwischen den beiden Abdecklagen (12, 24) eingebettet ist. Ferner betrifft die Erfindung ein entsprechendes Verfahren zur Herstellung eines solchen Solarmoduls.

## Beschreibung

Die vorliegende Erfindung betrifft ein Solarmodul zur Anbringung an Fahrzeugen gemäß dem Oberbegriff von Anspruch 1 sowie ein Verfahren zur Herstellung eines solchen Solarmoduls.

Gattungsgemäße Solarmodule zur Anbringung an Fahrzeugen sind üblicherweise als Foliensolarmodule ausgebildet, d.h. die Abdecklagen werden jeweils von einer flexiblen Folie gebildet, zwischen welche die Solarzellen eingebettet sind. Bei solchen Solarmodulen werden die elektrischen Anschlüsse üblicherweise von einem elastischen Kabel mit einer festen Länge, z.B. 5 m, gebildet, welches von dem Solargenerator durch die obere oder die untere Abdecklage bzw. Abdeckfolie hindurchgeführt ist, wobei an der Durchführungsstelle eine sogenannte Kabelkappe vorgesehen ist, welche zugleich für eine Abdichtung der Durchtrittsstelle sorgt und eine Zugentlastung für das Kabel bildet. Die Anbringung der Kabelkappe erfolgt dabei nach dem Einlaminieren des Solargenerators zwischen die beiden Abdecklagen. Die Verschaltung mehrerer Module erfolgt üblicherweise in separaten Verteilerkästen.

Bei solchen Solarmodulen besteht das Hauptproblem darin, eine gute Haftung der Kabelkappe an der Moduldeckfolie sowie eine gute Abdichtung der Durchtrittsstelle des Kabels durch die Moduldeckfolie zu erzielen. Dabei sind arbeitstechnisch gefährliche Vorgänge erforderlich, wie z.B. Gasbeflammung und Primern, wodurch die Fertigung aufwendig und somit teuer wird. Ferner werden die Module mit einer festgelegten Kabellänge geliefert, so daß unter Umständen der Anwender eine freiluftbeständige Verlängerung vornehmen muß, die mit zusätzlichen Ausfallrisiken verbunden ist.

Ferner sind Standardsolarmodule, z.B. für den Einsatz an Gebäuden, bekannt, die rückseitig mit Anschlußdosen versehen sind, um eine elektrische Verbindung zu dem Verbraucher herzustellen, siehe z.B. DE 297 14 217 U1 und EP 0 793 278 A2.

Aus DE 40 20 655 C1 ist ein Solardeckel für ein öffnungsfähiges Fahrzeugdach bekannt, bei welchem unterhalb einer Glasscheibe eine Solarzellenfolie angeordnet ist, deren Elektroden nahe der Deckelvorderkante mit zwei Flachsteckern verbunden sind, die jeweils von einem Steckergehäuse aufgenommen werden, das in einen Ausschnitt eines rahmenförmigen Deckelinnenblechs eingesetzt ist. Die Elektroden und die Flachstecker erstrecken sich dabei nach unten, d.h. senkrecht zu der Deckelebene. Ein Kontaktstecker ist von unten in jeden Flachstecker in elektrisch leitender Verbindung eingesteckt.

Es ist Aufgabe der vorliegenden Erfindung, ein Solarmodul zu schaffen, dessen elektrische Anschlüsse auf einfache und kostengünstige Weise ausgebildet sind. Ferner ist es Aufgabe der vorliegenden Erfindung, ein Herstellungsverfahren für ein solches Solarmodul zu schaffen.

Die obige Aufgabe wird erfindungsgemäß durch ein Solarmodul gemäß Anspruch 1 sowie ein Verfahren zur Herstellung eines solchen Solarmoduls gemäß Anspruch 17 gelöst.

Bei dieser erfindungsgemäßen Lösung ist vorteilhaft, daß keine nachträgliche Abdichtung der Herausführung bzw. Durchführung der Anschlüsse des Solarmoduls nach dem Einbetten des Solargenerators zwischen die Abdecklagen erforderlich ist. Insbesondere sind keine arbeitstechnisch gefährlichen Vorgänge, welche die Fertigung aufwendig und teuer machen, erforderlich und es wird dennoch eine gute Abdichtung des Solarmoduls erzielt. Die Verschaltung mehrerer Module kann durch Verwendung eines entsprechenden Kabelsatzes ohne den Einsatz von Verteilerkästen erfolgen. Da Leitung und Modul trennbar sind, kann ein Modul mehreren Anwendungen zugänglich gemacht werden, wie z.B. Kühlbox, Laptop und Boot. Durch die Steckverbindung ist das Modul ferner im Schadensfall leichter austauschbar und beim Transport leichter zu handhaben. Außerdem entfällt ein eventuelles Anstückeln der Verkabelung, da der Anwender die Kabellänge selbst festlegen kann.

Vorzugsweise ist das Solarmodul flexibel ausgebildet, wobei die Abdecklagen vorzugsweise als Schutzfolien ausgebildet sind und der Solargenerator und die Anschlußbuchse zwischen die Schutzfolien eingeschweißt sind. Die Anschlüsse sind vorzugsweise parallel zu der Modulebene orientiert, wobei sie vorzugsweise so angeordnet sind, daß sie eine Ebene aufspannen, die parallel zu der Modulebene liegt.

In die Anschlußbuchse können Strang- oder Bypaß-Dioden integriert sein.

Vorzugsweise ist die Anschlußbuchse so ausgebildet, daß sie im Zusammenspiel mit einem entsprechend ausgebildeten Stecker einer elektrischen Verbindungsleitung eine wasserdichte elektrische Verbindung zwischen dem Solargenerator und der Verbindungsleitung bildet.

Das Solarmodul ist vorzugsweise zur Anbringung auf einer gewölbten Außenfläche eines Fahrzeugs, wie beispielsweise einem Wohnmobil, einem Caravan oder einem Boot, für den Fahrbetrieb des Fahrzeugs ausgebildet.

Vorzugsweise ist das Solarmodul nicht dicker als 5 mm. Falls das Solarmodul für ein Boot vorgesehen ist, ist es vorzugsweise begehbar ausgebildet.

Im folgenden ist eine Ausführungsform der Erfindung anhand der beigefügten Zeichnungen beispielhaft näher erläutert. Es zeigen:
Fig. 1 schematisch eine perspektivische Ansicht eines erfindungsgemäßen Solarmoduls; und
Fig. 2 eine Schnittansicht entlang der Linie II-II von Fig. 1.

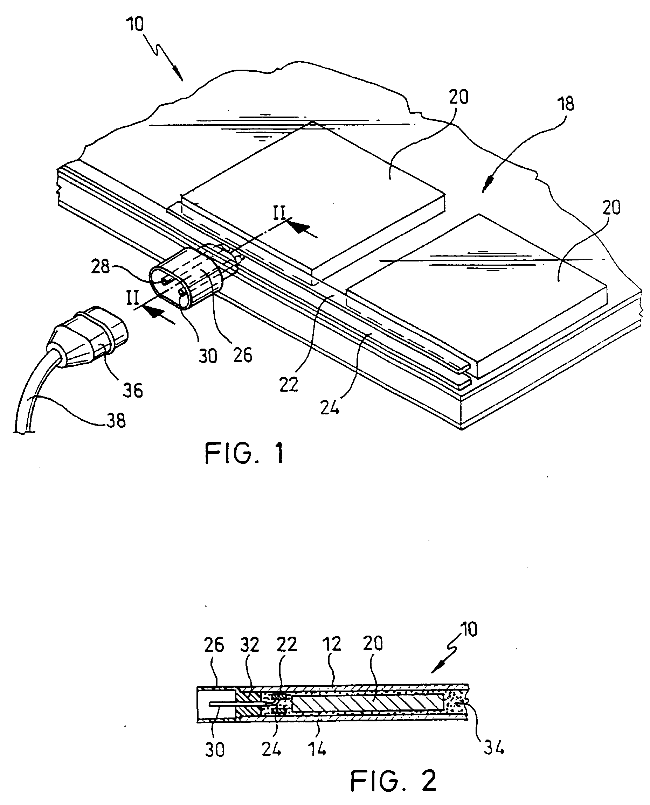

Gemäß Fig. 1 und 2 umfaßt ein Solarmodul 10 eine obere Abdeckfolie 12 und eine untere Abdeckfolie 14, zwischen welchen ein Solargenerator 18 eingebettet ist, der mehrere Solarzellen 20 (von denen in Fig. 1 nur zwei dargestellt sind) umfaßt, die mittels entsprechenden Verbindern miteinander elektrisch verbunden sind. Von diesen elektrischen Verbindern sind in Fig. 1 und 2 beispielhaft nur zwei Sammelverbinder 22 und 24 dargestellt. Vorzugsweise sind die Solarzellen 20 in parallel geschalteten Gruppen von jeweils mehreren in Reihe geschalteten Solarzellen 20 angeordnet, wobei die beiden Sammelverbinder 22, 24 für die einzelnen Gruppen vorgesehen sind und die beiden Anschlußpole des Solargenerators 18 bilden. Die Abdeckfolien 12 und 14 sind vorzugsweise als witterungsbeständige, seewasserfeste und UV-lichtbeständige Schutzfolien ausgebildet, die auch begehbar sein können. Das Solarmodul 10 ist insgesamt so flexibel ausgebildet, daß es auf gewölbten Außenflächen eines Fahrzeugs, wie beispielsweise einem Wohnmobil, Caravan oder Boot, angebracht werden kann. Ferner soll das Solarmodul 10 so stabil ausgebildet sein, daß es für den Fahrbetrieb des entsprechenden Fahrzeugs geeignet ist. Vorzugsweise ist das Solarmodul 10 zur lösbaren Anbringung an einem Fahrzeug - beispielsweise mittels eines Klettbandes ausgebildet.

An einer Seitenfläche des Solarmoduls 10 ist eine Anschlußbuchse 26 vorgesehen, die mindestens zwei elektrische Anschlüsse 28 bzw. 30 aufweist, welche in der Modulebene liegen und so angeordnet sind, daß sie eine Ebene aufspannen, die parallel zu der Modulebene liegt, d.h. die Anschlüsse 28, 30 sind in einer 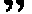 liegenden" Stellung angeordnet. Der von der Anschlußseite abgewandte, d.h. rückwärtige, Teil 32 der Anschlußbuchse 26 ist dichtend zwischen den beiden Abdeckfolien 12 und 14 in ähnlicher Weise wie der Solargenerator 18 eingebettet. Der eine Anschluß 30 ist elektrisch mit dem einen Sammelverbinder 22 verbunden, während der andere Anschluß 28 mit dem Sammelverbinder 24 verbunden ist. Vorzugsweise sind der Solargenerator 18 und die Anschlußbuchse 26 zwischen die Schutzfolien 12 und 14 in ein Einbettungsmaterial 34 eingeschweißt oder einlaminiert.

In die Anschlußbuchse 26 können Strang- oder Bypaß-Dioden (in Fig. 1 und 2 nicht dargestellt) integriert sein.

Ein entsprechender Stecker 36 mit einem zu einem Verbraucher führenden Verbindungskabel 38 ist so ausgebildet, daß er im Zusammenspiel mit der entsprechend ausgebildeten Anschlußbuchse 26, wenn er in diese eingesteckt ist, eine wasserdichte elektrische Verbindung zwischen dem Solargenerator 18 und dem Verbindungskabel 38 bildet. Die Länge des Verbindungskabels 38 kann von dem Anwender in Abhängigkeit von dem gewünschten Einsatz des Solarmoduls 10 flexibel gewählt werden. Durch Wahl von entsprechend ausgebildeten Verbindungsleitungen bzw. -kabeln 38 kann eine gewünschte Verschaltung mehrerer Solarmodule 10 erzielt werden. Statt in die Anschlußbuchse 26 können Strang- bzw. Bypaß-Dioden auch in den Stecker 36 integriert sein.

Die Herstellung des Solarmoduls 10 erfolgt so, daß der Solargenerator 18 und das rückwärtige Anschlußbuchsenteil 32 zwischen die Schutzfolien 12 und 14 plaziert werden, wobei der Anschluß 28 mit dem Sammelverbinder 24 und der Anschluß 30 mit dem Sammelverbinder 22 elektrisch verbunden wird. Anschließend werden die beiden Schutzfolien 12 und 14 miteinander verschweißt, so daß der rückwärtige Anschlußbuchsenteil 32 und der Solargenerator 18 dichtend zwischen den beiden Schutzfolien 12 und 14 eingebettet sind.

Durch Wahl eines entsprechenden Verbindungskabels 38 ist es möglich, daß ein Solarmodul 10 mehrere Verbraucher gleichzeitig oder nacheinander bedienen kann.

Ein erfindungsgemäßes Solarmodul ist auch in hervorragender Weise für ein festes Fahrzeugteil oder ein bewegbares Fahrzeugteil, wie beispielsweise eine Windabweislamelle, einen Deckel eines Schiebehebedachs, ein Ausstelldach, ein Lamellendach geeignet. Es erleichtert dort die Montage und die Austauschbarkeit im Reparaturfall.

### Bezugszeichenliste

- Solarmodul: **10**
- Schutzfolien: **12, 14**
- Solargenerator: **18**
- Solarzellen: **20**
- Sammelverbinder: **22, 24**
- Anschlußbuchse: **26**
- Anschlüsse: **28, 30**
- rückwärtiger Teil von 26: **32**
- Einbettungsmaterial: **34**
- Stecker: **36**
- Verbindungskabel: **38**

## Patentansprüche

1. Solarmodul zur Anbringung an Fahrzeugen, mit einer oberen Abdecklage (12) und einer unteren Abdecklage (14), zwischen welchen ein Solargenerator (18) eingebettet ist, der mehrere elektrisch miteinander verbundene Solarzellen (20) umfaßt, sowie zwei elektrischen Anschlüssen (28, 30) zum Abgreifen des von dem Solargenerator erzeugten Solarstroms, wobei für die Anschlüsse (28, 30) eine Anschlußbuchse (26) vorhanden ist, die an einer Seite des Solarmoduls (10) angeordnet ist **dadurch gekennzeichnet,** daß der von der Anschlußseite abgewandte Teil (32) der Anschlußbuchse dichtend zwischen den beiden Abdecklagen (12, 24) eingebettet ist.

2. Solarmodul nach Anspruch 1, **dadurch gekennzeichnet,** daß das Solarmodul (10) flexibel ist.

3. Solarmodul nach Anspruch 2, **dadurch gekennzeichnet,** daß die Abdecklagen (12, 14) als Schutzfolien ausgebildet sind.

4. Solarmodul nach Anspruch 3, **dadurch gekennzeichnet,** daß der Solargenerator (18) und der von der Anschlußseite abgewandte Teil (32) der Anschlußbuchse (26) zwischen die Schutzfolien (12, 14) eingeschweißt sind.

5. Solarmodul nach Anspruch 4, **dadurch gekennzeichnet,** daß die Schutzfolien (12, 14) witterungsbeständig, seewasserfest und UV-Licht-beständig sind.

6. Solarmodul nach Anspruch 5, **dadurch gekennzeichnet,** daß das Solarmodul (10) zur Anbringung auf einer gewölbten Außenfläche eines Fahrzeugs ausgebildet ist.

7. Solarmodul nach einem der vorhergehenden Ansprüche, **dadurch gekennzeichnet,** daß das Solarmodul (10) zur Anbringung auf einem Wohnmobil, Caravan oder Boot ausgebildet ist.

8. Solarmodul nach Anspruch 7, **dadurch gekennzeichnet,** daß das Solarmodul (10) für den Fahrbetrieb ausgebildet ist.

9. Solarmodul nach einem der vorhergehenden Ansprüche, **dadurch gekennzeichnet,** daß das Solarmodul (10) zur lösbaren Anbringung an Fahrzeugen ausgebildet ist.

10. Solarmodul nach einem der vorhergehenden Ansprüche, **dadurch gekennzeichnet,** daß das Solarmodul (10) begehbar ist.

11. Solarmodul nach einem der vorhergehenden Ansprüche, **dadurch gekennzeichnet,** daß das Solarmodul (10) nicht dicker als 5 mm ist.

12. Solarmodul nach einem der vorhergehenden Ansprüche, **dadurch gekennzeichnet,** daß die Anschlüsse (28, 30) parallel zu der Modulebene orientiert sind.

13. Solarmodul nach Anspruch 12, **dadurch gekennzeichnet,** daß die Anschlüsse (28, 30) so angeordnet sind, daß sie eine Ebene aufspannen, die parallel zu der Modulebene liegt.

14. Solarmodul nach einem der vorhergehenden Ansprüche, **dadurch gekennzeichnet,** daß Strang- oder Bypassdioden in die Anschlußbuchse (26) integriert sind.

15. Solarmodul nach einem der vorhergehenden Ansprüche, **dadurch gekennzeichnet,** daß die Anschlußbuchse (26) so ausgebildet ist, daß sie im Zusammenspiel mit einem entsprechend ausgebildeten Stecker (36) einer elektrischen Verbindungsleitung (38) eine wasserdichte elektrische Verbindung zwischen dem Solargenerator (18) und der Verbindungsleitung bildet.

16. Solarmodul nach einem der vorhergehenden Ansprüche, **dadurch gekennzeichnet,** daß die Solarzellen (20) in parallel geschalteten Gruppen von jeweils mehreren in Reihe geschalteten Solarzellen angeordnet sind, wobei zwei Sammelverbinder (22, 24) für die Gruppen vorgesehen sind und jeder Anschluß (28, 30) der Anschlußbuche (26) mit einem der Sammelverbinder elektrisch verbunden ist.

17. Verfahren zur Herstellung eines Solarmoduls zur Anbringung an Fahrzeugen, wobei ein Solargenerator (18), der mehrere elektrisch miteinander verbundene Solarzellen (20) umfaßt, mit zwei Anschlüssen (28, 30) an einer Anschlußbuchse (26) zum Abgreifen des von dem Solargenerator erzeugten Solarstroms elektrisch verbunden wird, und der Solargenerator und der von der Anschlußseite abgewandte Teil (32) der Anschlußbuchse zwischen einer oberen (12) und einer unteren Abdecklage (14) dichtend eingebettet werden.

18. Verfahren nach Anspruch 17, **dadurch gekennzeichnet,** daß es sich bei den Abdecklagen (12, 14) um Schutzfolien handelt, die verschweißt werden, um den Solargenerator (18) und den von der Anschlußseite abgewandten Teil (32) der Anschlußbuchse (26) zwischen sich einzubetten.

19. Verwendung eines Solarmoduls nach einem der Ansprüche 1 bis 16, **dadurch gekennzeichnet**, daß es an einem festen Dachteil, wie einem Deckel eines Schiebehebedachs, einer Windabweislamelle, einem Ausstelldach, einem Lamellendach oder einem sonstigen festen Karosserieteil angeordnet ist.
